Europäisches Patentamt

European Patent Office

Office européen des brevets

(19)

(11) **EP 1 038 187 B1**

(12) **EUROPEAN PATENT SPECIFICATION**

(45) Date of publication and mention
of the grant of the patent:
**28.12.2005 Bulletin 2005/52**

(21) Application number: **99947857.1**

(22) Date of filing: **08.10.1999**

(51) Int Cl.[7]: **G01S 5/02**, G01S 5/14,
G01S 1/04, G01S 3/48

(86) International application number:
**PCT/IT1999/000315**

(87) International publication number:
**WO 2000/022452 (20.04.2000 Gazette 2000/16)**

(54) **GYROCOMPASSING BY INTERMITTENT GPS INTERFEROMETRY**

KREISELKOMPASS UNTERSTÜTZT VON INTERMITTIERENDER GPS INTERFEROMETRIE

MESURES AU GYROCOMPAS PAR INTERFEROMETRE GPS

(84) Designated Contracting States:
**DE ES FR GB IT**

(30) Priority: **12.10.1998 IT RM980638**

(43) Date of publication of application:
**27.09.2000 Bulletin 2000/39**

(73) Proprietor: **FINMECCANICA S.p.A.**
**00195 Roma (IT)**

(72) Inventor: **MAZZINI, Leonardo**
**I-00182 Roma (IT)**

(74) Representative: **Capasso, Olga et al**
**de Simone & Partners SpA**
**Via V.Bellini 20**
**00198 Roma (IT)**

(56) References cited:
WO-A-98/29757          DE-C- 19 651 543
US-A- 4 754 280          US-A- 5 101 356

• **LIGHTSEY, E G: "Spacecraft Attitude Control Using GPS Carrier Phase" CHAPTER 16 OF: GLOBAL POSITIONING SYSTEM: THEORY AND APPLICATIONS, VOLUME II,1996, pages 461-480, XP002127975 American Institute of aeronautics and Astronautics, Inc., Washington, DC**
• **FUJIKAWA S J ET AL: "SPACECRAFT ATTITUDE DETERMINATION BY KALMAN FILTERING OF GLOBAL POSITIONING SYSTEM SIGNALS" JOURNAL OF GUIDANCE AND CONTROL AND DYNAMICS,US,AIAA. NEW YORK, vol. 18, no. 6, 1 November 1995 (1995-11-01), pages 1365-1371, XP000558649 ISSN: 0731-5090 cited in the application**

## Description

Technical Field

The invention described here concerns the use of GPS (Global Positioning System) interferometry, or any similar satellite constellation, to estimate the attitude of a vehicle, and is particularly suited for LEO (Low Earth Orbit) satellites. The invention is based on a system of gyroscopic and interferometric sensors and a piece of software to process the data received by such sensors. The invention can be applied to any type of vehicle (terrestrial, naval, aircraft or spacecraft) to determine the attitude of the vehicle with respect to an inertial reference system.

Background Art

According to the present state of the art, in order to calculate the attitude of a vehicle, it is necessary to have two microwave sources in known positions of space. The presence of the GPS constellation realises this condition and in fact various instruments are today available for such measurements (see references G and H).

Those instruments are designed to provide independent attitude measurements on three axes. The use of gyroscopic instrumentation is optional, and it is not needed for attitude measurement, but only to filter high frequency noise on measurement outputs.

The basic scheme described in literature (see references A and B) for satellite attitude estimation consists of:

- a constellation of N source satellites, each of which broadcasts an electromagnetic signal which makes it possible to perform interferometric measurements; and
- a receiver having four antennas (one of which for redundancy) pointed in the same direction.

According to the scheme indicated above, the differential phase measurement is performed by two pairs of antennas with respect to all the N satellites in the visibility field (a source satellite is meant to be in the visibility field when the signal coming from the satellite has a satisfactory signal-to-noise ratio).

We have therefore a system of 2N equations in the three attitude unknowns. This system is solved by the pseudo-inverse method (least square solution).

A necessary condition for the solution of attitude equations is that there should be at least two source satellites in the visibility field of the antenna network. The accuracy of estimate depends on the differential phase errors due to an unbalancing of the hardware measurement device, or on phase errors caused by mutual interaction among antennas (multipath errors), or on a misalignment of antennas.

The antennas commonly used for this purpose are antennas having a wide field of view (70-80 degrees of visibility cone), which are often not suitable for interferometric measurements in terms of thermal sensitivity, phase measurement stability and coupling with satellite structure. This results in limitations for attitude estimation accuracy for those kind of methods.

The following references summarise the state of the art relative to the invention described below.

A. J.K. BROCK: *GPS Tensor-GPS receiver for attitude and orbit determination,* ION-GPS 95, Palm Springs, September 1995.
B. J.K. BROCK, R. FULLER, S. HUR-DIAZ, J. RODDEN: *"GPS Attitude and Orbit Determination for Space",* Space Systems/LORAL, Palo Alto, CA 94303.
C. C.E. COHEN: *Attitude Determination Using GPS,* Ph.D. Dissertation, December 1992, Stanford University.
D. S.J. FUJIKAWA, D.F. ZIMBELMAN: *"Spacecraft Attitude Determination by Kalman Filtering of Global Positioning System Signals",* Journal of Guidance, Control and Dynamics, 1995.
E. R. FULLER, S. GOMEZ, L. MARRADI, J. RODDEN: *"GPS Attitude Determination From Double Difference Differential Phase Measurements",* ION-GPS 96, Kansas City, September 1996.
F. C.D. HARDWICK, J. LIU: *"Characterization of Phase and Multipath Errors for an Aircraft GPS Antenna"* Navigation, 1996.
G. L. MARRADI, D. FOSSATI: *"The GPS Tensor Receiver Development",* Proceedings of the Third International Conference on Spacecraft Guidance, Navigation and Control Systems, ESTEC, Noordwijk, NL, ESA SP-381, February 1997.
H. SACCHETTI: *"Design and Qualification of a GPS receiver for orbit and attitude determination in space",* ION-GPS, 1994.
I. A. E. BRYSON, JR: *"Control of Spacecraft and Aircraft",* Princeton University press 1994.

Disclosure of Invention

The main object of the invention described here is to improve the accuracy of the attitude measurement system. This object is reached through the following characteristics:

- the use of a gyro (according to the present state of the art, gyro measurements were hitherto used only to filter the external output of interferometric-measured attitude; whereas, according to the present invention, gyro measurements are directly involved in the attitude estimation process);
- the use of interferometric measurements only in phase pattern zones where the phase response of each antenna is constant;

- the possibility of working with even a single source satellite within the visibility field of the vehicle, the attitude of which is to be estimated;
- the on line calibration of interferometer static errors; and
- the use of antennas having particular characteristics of stability of phase error in temperature (<0.2°/ K) and a constant radiation pattern (within 3 degrees of phase) in a relatively wide (30°) field of view and good (<-15dB) crosspolar characteristics.

The features indicated above are only present in the invention described here.

The invention is described now in its essential aspects. The gyro makes it possible to calculate attitude variations but not absolute attitude itself. The basic principle of the invention rests on the fact that interferometric measurements can be correlated with each other, even if made in different moments or along different axes, due to the reconstruction that the gyro is able to do of the relative attitude variations in the various measurement times.

For this purpose, it is necessary to compare gyro output signals with those from interferometer not at the attitude angle measurement level, but at the interferometric measurement level, performing a more efficient dynamic filtering of measurements.

Dynamic filtering is performed by an observer structure in which residuals are directly computed as differences between interferometric measurements of phase and estimated values.

If the vehicle motion is not inertial, as is the case with Earth-pointing satellites, substantial advantages come from this:

- attitude estimation requires only one source satellite in the field of view even intermittently (more than one satellite improve estimation but are not required; if the residual between interferometer and gyro were made on attitude angles, then at least two satellites would be required);
- GPS interferometry can be used with a narrow antenna field of view (typically 20 or 30 degrees for semi-cone angle) around Nadir direction, avoiding to collect differential phase measurements in the lowest quality phase pattern zones (this makes it possible to have an accuracy less dependent on the satellite configuration and multipath problems);
- the particular type of dynamic filtering makes it possible an on-line estimate of misalignments and constant phase errors (such a characteristic improves the overall system accuracy; the estimating filter speed of convergence depends on the orbital velocity and this function is particularly suited to LEO satellites, less suited to terrestrial vehicles).

The attitude measurement configuration described here consists of a three-axis gyroscopic sensor and an interferometric sensor having at least three antennas (plus one for redundancy) far apart from each other, a piece of processing software common to the two sensors and working on the raw data provided by the sensors (differential phases and angular velocities). Said piece of processing software only needs, as its input, the position occupied by the source satellites and user vehicle and provides, as its output, estimates of the attitude and of the misalignment between the antenna system and the gyro reference system.

The use of the gyroscopic instrumentation is similar to the one classically known as "gyrocompassing" and described in reference I.

The described measurement configuration is capable of working for any kind of vehicle; however performance depends on the user vehicle trajectory and on the visibility of source satellites during the trajectory.

In the case of inertial pointing satellites, there is no chance of observing misalignments and receiver line offsets; then an operative step of calibration of Earth pointing should be taken.

For illustrative but not limiting purposes, the description is now limited to the case of Earth pointing LEO satellites. The invention, however, can be applied to any vehicle.

List of figures:

Fig. 1 shows the user vehicle 11 (in this case, a satellite) with its reference system $x_0$, $y_0$, $z_0$, the visibility cone 14 with its semi-aperture angle $\theta$, and the source satellite 10.

Fig. 2 provides particulars of satellite 11. Fig. 2 shows satellite 11 with four receiving antennas 12 mounted in Zenith direction on a mounting cone 13 placed on the panel opposite to the Earth direction of satellite 11.

Fig. 3 shows a block scheme of the estimator, as better described below.

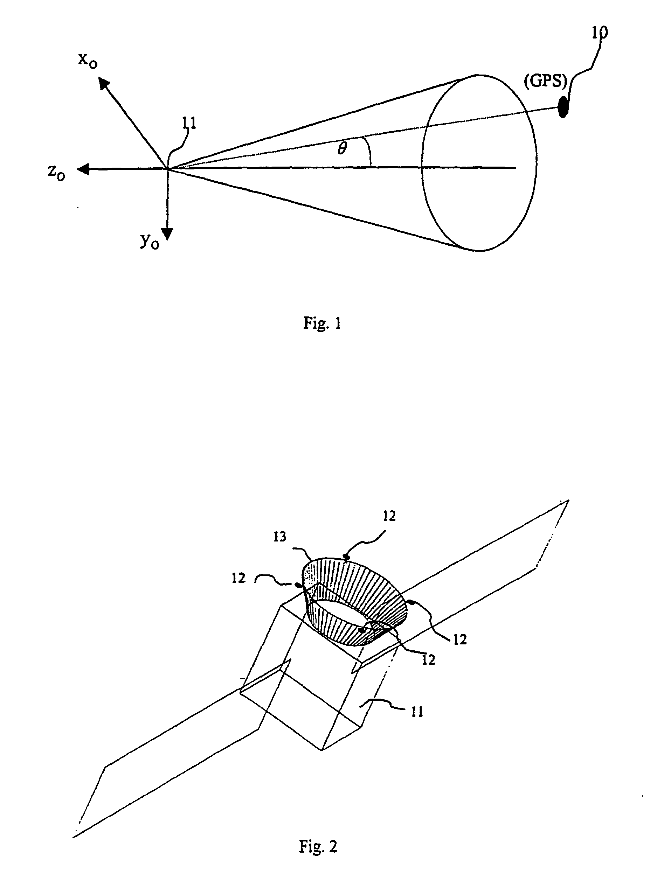

When a satellite belonging to a constellation of source satellites, like GPS, comes into the visibility cone (i.e., 20° off-Nadir), an interferometric measurement is made possible (see Fig. 1).

The amplitude of visibility cone 14 results from a trade-off between the need to increase visibility and phase pattern quality, and multipath sensitivity.

With three receiving antennas, two independent and simultaneous differential phase measurement are obtained for each GPS satellite in the visibility cone; these measurements are correlated with the two attitude angles of roll and pitch and only weakly with the angle of yaw. The measurement matrix is not stationary.

The coverage analysis performed with a 20° semi-aperture cone provides the following results for the GPS constellation:

- the visibility of GPS satellites is quasi independent of the height of the orbit of satellite 11 between 500 and 1000 km;

- the best inclination angle for said user satellite orbit is 45°-55°, which results in 70% coverage;
- the worst inclination is 0°, which results in only 50% coverage.

The antennas supply an intermittent interferometric measurement. The dynamic filter goes on propagating attitude by means of the gyro during the periods of lack of visibility; obviously during these periods no improvement can be got in the determination of the attitude and misalignment errors.

In general terms, the performance depends on :

- gyro drift and scale factor;
- interferometer multipath in the visibility cone;
- frequency of visibility.

The system performance is dependent on some of the antenna parameters.

The system capability to get a good performance depends on the fact that the differential phase measurement error, for a given attitude of the gyro reference system, should be constant.

Receiver line bias, errors in the mounting of antennas, and an error on the knowledge of the phase center of the antennas lead to an error of this kind. The multipath, the thermal phase tracking error and thermoelastic deformations cannot be balanced by dynamic filtering and therefore they should be limited and controlled.

The choice of receiving antennas depends on the system requirements. An antenna having a broad beam width, as is the case with the "micro-strip patches", has usually strong and hardly modellable multipath effects. The best choice for a high performance system is a medium-beam antenna having a low temperature-dependent error of tracking. The multipath due to such mobile surfaces of the satellite as solar panels should be kept outside the visibility cone.

For this purpose, mounting the antennas on a high cone (see Fig. 2) on the satellite makes the system apt to reach superior performance.

As an example, with reference to Fig. 2, a satellite 11 having four antennas 12, each with a 60 degree beam width, mounted on a 30 cm high cone 13 is capable to restrain multipath errors in a semi-cone field of 30° of about ± 2°, which can change with temperature by ± 1 phase degrees. Additional constant errors that can be calibrated (including receiver bias) are about 5 phase degrees in magnitude.

(Note: 1 degree in phase error corresponds to 0.03 degrees in attitude angle error, for a distance of 1m between the antennas).

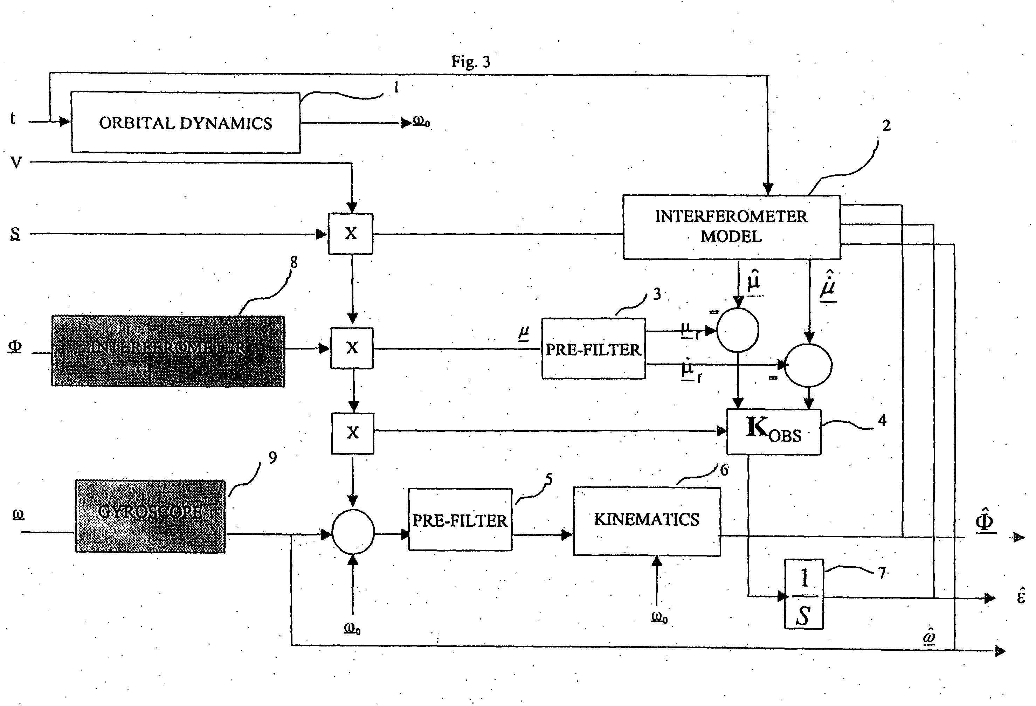

The estimator structure is shown in Fig. 3. The on board software components are identified by using white boxes, whereas gray boxes are used to represent physical sensors.

The internal algorithms for each component are strictly related to the function performed by that component, for any specific implementation of the present invention. For this reason, the mathematical structure of such algorithms is not described here.

Referring to Fig. 3, the symbols shown are:

t:      time (On Board Reference Time);
$v$ :    visibility of the microwave source(s);
$\underline{s}$ :    direction of the source in orbital reference frame; .
$\underline{\Phi}$ :    attitude relative to orbital reference frame;
$\underline{\omega}$ :    inertial angular velocity;
$\underline{\hat{\omega}}$ :    estimated inertial angular velocity;
$\underline{\omega}_0$ :    orbital angular velocity;
$\underline{\mu}$ :    differential phase measurements;
$\underline{\mu}_f$ :    pre-filtered differential phase measurements;
$\underline{\hat{\mu}}$ :    estimated differential phase measurements;
$\underline{\varepsilon}$ :    constant misalignments (between gyro and interferometer);
$\underline{\hat{\Phi}}$ :    estimated attitude relative to orbital reference system.

The system, which forms the subject of the present invention, is described below through its elements with reference to Fig. 3.

Orbital dynamics 1 consists of the equations that make it possible to calculate the angular velocity of the orbital reference frame at a given time. In order to write such equations, the orbit of the user satellite must be known. The angular velocity $\underline{\omega}_0$ of the orbit reference system is necessary to the kinematics block 5 to propagate the attitude errors, once the inertial angular velocities $\underline{\omega}$ of the gyro are known.

The interferometer model 2 provides the expected interferometric measurements and their derivatives on the basis of the satellite position, of the calibrated misalignments and of the estimated attitude.

Pre-filter 3 performs pre-filtering of interferometric measurements and pseudo-derivator.

Pre-filter 5 performs pre-filtering of the gyro output.

Component $K_{obs}$ is an estimator tool that, starting from the residuals between interferometric measurements and their derivatives and expected measurements, generates the feed-back on the attitude angles observer. This component can be time-dependent and its synthesis can be made by several techniques.

Kinematics 6 calculates attitude angles relative to the orbital reference frame starting from the inertial relative angular velocity $\underline{\omega}_0$ of the satellite with respect to the orbital reference frame.

Integrator 7 integrates the differential equations of the estimator.

The inclusion of the interferometric measurements derivatives in the residual vector of the observer is suggested by the time variability of the measurement matrix of the system, due to the motion of the source satellites (e.g., GPS) in the orbital reference frame. The use of the derivatives implies a larger observability; in the case of Earth-pointing satellites, it allows the on-line calibration of the antennas offset about the pitch axis.

The internal algorithmic structure of the components described above should be specifically designed for each case. However, the essential elements of this structure are:

- the use of interferometric measurements like residuals in the observer;
- the calibration of the static errors on phase measurements.

A simplified description of the algorithms is shown below for the case of a circular orbit Earth-pointing satellite. Calibration schemes of interferometer constant errors are not included here, for they require a heavier treatment.

Given:

$\bar{\phi} = [\varphi, \psi]$       attitude roll, yaw

$\theta$       attitude pitch

$$\Omega = \begin{bmatrix} 0 & 1 \\ -1 & 0 \end{bmatrix} \cdot n_0,$$

$n_0$ = orbital velocity

$g_x, g_y, g_z$       gyro output

$d_x, d_y, d_z$       gyro drifts

$\alpha_{xz}, \alpha_{zx}$       gyro misalignments

$$\bar{\omega} = \begin{bmatrix} g_x \\ g_z \end{bmatrix} + n_0 \begin{bmatrix} -\alpha_{xz} \\ \alpha_{zx} \end{bmatrix} - \begin{bmatrix} d_x \\ d_z \end{bmatrix}$$

inertial angular velocity
the involved kinematics equations are:

$$\dot{\bar{\phi}} = \Omega \bar{\phi} + \bar{\omega};$$

$$\dot{\theta} = g_y - n_0 - d_y$$

The filter included in this scheme is designed analogously to the one of the "gyrocompassing".

In the simplified scheme shown above the antennas point to Nadir of the user satellite and consequently the interferometric measurement can be assimilated to that of roll and pitch of an equivalent Earth sensor. In this scheme the equations for the estimation of the constant interferometer phase errors (not shown here) converge only for the x axis, but in the general case they also converge for the y axis.

The interferometric measurement equations are:

$$\begin{bmatrix} \mu_x & \mu_y \end{bmatrix} = \begin{bmatrix} \varphi & \theta \end{bmatrix} + \begin{bmatrix} \varepsilon_x & \varepsilon_y \end{bmatrix}$$

where:

$$\begin{bmatrix} \mu_x & \mu_y \end{bmatrix}$$

interferometric measurements

$$\begin{bmatrix} \varepsilon_x & \varepsilon_y \end{bmatrix}$$

measurement error of the interferometer

Being :     $k_x, k_y, k_z$ the observer gains

The estimation equations are :

$$\dot{\hat{\bar{\phi}}} = \Omega \bar{\hat{\phi}} + \begin{bmatrix} g_x \\ g_z \end{bmatrix} + \begin{bmatrix} k_x \\ k_z \end{bmatrix} \cdot n_o \cdot \left( \varepsilon_x - \hat{\phi} \right)$$

$$\dot{\hat{\theta}} = g_y - n_0 + k_y n_0 \cdot \left( \varepsilon_y - \hat{\theta} \right)$$

The observer gains are null when no interferometric measurements are available; in those periods the kinematics is estimated by only using the gyro.

Filter gains must be calculated suitably for the application or can be on-line calculated with an unsteady observer.

The characteristics of the on board sensors, which are essential to evaluate the system performance, are shown below.

GYRO: Ring Laser Gyro

- Three-axis measurement of the angular velocity;
- Gyro drifts: 0.02°/h;
- Random Walk: 0.01°/h$^{1/2}$;
- Alignment with interferometer baseline: 0.02°;

GPS Antenna and Receiver Characteristics

- Receiver noise: 2.5 mm <1 sigma> (4.5° phase noise <1 sigma>) (a 100 msec sampling time, source on the Nadir);
- Line bias: 2.5 mm <1 signa> (4.5° phase);
- Multipath: ± 2° multipath in a 30° field-of-view semi-cone, considering the interactions with the satellite;
- Phase tracking errors: coax. thermal sensitivity = 300 ppm from 10° to 80°, for a 2 meter long cable => 1 (° phase); Antenna phase tracking = 0.02 (°/K);
- Antenna having low crosspolar (typically less than -15 dB from the copolar).

An antenna having excessively high thermal phase tracking errors can be thermally controlled by the means of an appropriate scheme.

**Claims**

1. System based on GPS (Global Positioning System) interferometry or on any similar satellite constellation to measure the attitude of a vehicle (11), said system comprising: a three-axis gyroscopic sensor (9); an interferometric sensor (8) with multiple antennas (12), having at least three antennas, which measures the differential phase of the electromagnetic waves generated by source satellites (10); a piece of software for processing the data coming from said interferometic sensor (8) and from said gyroscopic sensor (9); said piece of software comprising in turn orbital dynamics (1) which represents the equations providing the angular velocity of the orbit reference frame at a given time, an interferometer model (2) which provides the expected interferometric measurements and their derivatives on the basis of the positions of said source satellites (10), of the calibrated misalignments and of the esteemed attitude, a first pre-filter (3) which performs the functions of pre-filtering the interferometric measurements and a pseudo-derivator, a second pre-filter (5) which performs the pre-filtering of the signals coming from said gyroscopic sensor, estimator (4) which, starting from the residuals between said interferometric measurements and their derivatives and between said expected interferometric measurements and their derivatives, produces feedback of attitude angles on the observer, a kinematics (6) which calculates the attitude angles with respect to orbit reference frame starting from the relative inertial angular velocity of said vehicle (11) with respect to orbit reference frame, an integrator (7) which integrates the differential equations of said estimator (4); said piece of software performing the following functions: decoding of the positions of said source satellites (10) and, through the processing of the data coming from said source satellites (10), determination of the position of said vehicle (11); calculation of the three-axis attitude of said vehicle (11); calculation of the constant measurement error of said interferometer (8) with respect to the natural reference frame of said gyroscope (9); **characterised in that** said estimator (4) uses the difference between the measurements from said interferometer (8) and the prediction of said measurements, as residuals; whereby the system achieves that the measurements of the attitude of said vehicle can be performed even if only one of said sources satellites (10) is in the field of view of said vehicle (11); that the attitude measurements of said vehicle (11) can be performed even in conditions of temporary invisibility of said source satellites (10); and that said estimator (4) can perform on-line the calibration of static errors of measurements of differential phase.

2. The system claimed in claim 1, **characterised in that** said source satellites (10) may be one, or a constellation of satellites, or more constellations of satellites.

3. The system claimed in claim 1 or in claim 2, **characterised in that** said system can work for any type of said vehicle (11), and in particular when said vehicle (11) is a satellite.

4. The system claimed in any one of the preceding claims, **characterised in that** said system can work for any type of said antennas (12), and preferably if said antennas (12) are provided with a thermal control system, or are stable in temperature preferably by 3 degrees of phase in the operating interval of temperatures, if said antennas (12) have such a mounting system on said vehicle (11) or such an electromagnetic configuration as to contain the phase error due to multipath below 3 degrees in a visibility cone of 30 degrees from the axis of antenna (12).

**Patentansprüche**

1. Auf GPS (Global Positioning System)-Interferometrie oder jede andere ähnliche Satellitenkonstellation basierendes System zur Messung des Standpunkts eines Fahrzeugs (11), wobei besagtes System folgendes beinhaltet: einen dreiachsigen gyroskopischen Sensor (9); einen interferometrischen Sensor (8) mit multiplen Antennen (12), mindestens aber drei Antennen, der die Differentialphase der durch Quellsatelliten (10) erzeugten elektromagnetischen Wellen misst; eine Software zum Verarbeiten der vom besagten interferometrischen Sensor (8) und vom besagten gyroskopischen Sensor (9) kommenden Daten; diese Software, bestehend aus einer Tum-Orbital-Dynamik (1), die die Gleichungen darstellt, welche die Winkelgeschwindigkeit des Orbitalbezugssystems zu einer gegebenen Zeit darstellen, ein interferometrisches Modell (2), das die erwarteten interferometrischen Messungen und deren Ableitungen auf der Grundlage der Positionen der besagten Quellsatelliten (10) liefert, kalibrierte Ausrichtungsfehler und den geschätzten Standpunkt, einen ersten Vorfilter (3), der die Funktionen des Vorfilterns der interferometrischen Messungen durchführt und einen Pseudoderivator, einen zweiten Vorfilter (5), der das Vorfiltern der von besagtem gyroskopischen Sensor kommenden Signale durchführt, einen Kalkulator (4), der ausgehend von den Residuen zwischen den besagten interferometrischen Messungen und deren Ableitungen und zwischen den besagten erwarteten interferometrischen Messungen und deren Ableitungen ein Feedback der Standortwinkel auf den Betrachter erzeugt, eine Kinematik (6), die die Standortwinkel unter Berücksichtigung des Orbital-Bezugsrahmens ausgehend von der relativen Trägheitswinkelgeschwindigkeit des besagten Fahrzeugs (11) unter Berücksichtigung des Umlaufbahnbezugsrahmens berechnet, einen Integrator (7), der die Differentialgleichungen des besagten Kalkulators (4) integriert; wobei besagte Software folgende Funktionen ausführt: Dekodierung der besagten Quellsatelliten (10) und mittels Verarbeitung der von den besagten Quellsatelliten (10) kommenden Daten Bestimmung der Position des besagten Fahrzeugs (11); Berechnung des dreiachsigen Standorts des besagten Fahrzeugs (11); Berechnung des konstanten Messfehlers des besagten Interferometers (8) unter Berücksichtigung des natürlichen Bezugsrahmens des besagten Gyroskops (9); **dadurch gekennzeichnet, dass** besagter Kalkulator (4) den Unterschied zwischen den Messungen des besagten Interferometers (8) und der Vorhersage der besagten Messungen als Residuum benutzt;

dass die Messungen des Standorts des besagten Fahrzeugs auch dann durchgeführt werden können, wenn nur einer der Quellsatelliten (10) im Blickfeld des besagten Fahrzeugs liegt (11); dass die Standortmessungen des besagten Fahrzeugs (11) auch unter Bedingungen durchgeführt werden können, in denen die besagten Quellsatelliten (10) vorübergehend undurchsichtig sind; und **dadurch**, dass besagter Kalkulator (4) die Kalibrierung statischer Messfehler einer Differentialphase online durchführen kann.

2. System nach Patentanspruch 1 **dadurch gekennzeichnet, dass** besagte Quellsatelliten (10) aus einem oder aus einer Satellitenkonstellation oder mehreren Satellitenkonstellationen bestehen kann.

3. System nach Patentanspruch 1 oder Patentanspruch 2 **dadurch gekennzeichnet, dass** besagtes System für jeden Typ des besagten Fahrzeugs (11) funktioniert und insbesondere, wenn besagtes Fahrzeug (11) ein Satellit ist.

4. System nach jedem der vorangehenden Patentansprüche **dadurch gekennzeichnet, dass** besagtes System für jeden Typ der besagten Antennen (12) funktioniert und vorzugsweise wenn besagte Antennen (12) mit einem thermischen Steuersystem ausgestattet sind oder wenn diese innerhalb einer Phase von 3 Grad im Bereich der Betriebstemperaturen temperaturstabil sind, wenn besagte Antennen (12) ein Einbausystem an besagtem Fahrzeug (11) oder eine elektromagnetische Konfiguration besitzen, dass diese den durch Multipath verursachten Phasenfehler unter 3 Grad in einem Sichtkegel von 30 Grad von der Antennenachse (12) enthalten.

**Revendications**

1. Système fondé sur l'interférométrie GPS (Global Positioning System) ou sur toute constellation de satellites semblable pour relever l'attitude d'un véhicule (11); ledit système comprend: un capteur gyroscopique triaxial (9); un capteur interférométrique (8) à antennes multiples (12), possédant au moins trois antennes et mesurant la phase différentielle des ondes électromagnétiques générées par des satellites sources (10); un logiciel de traitement des données provenant dudit capteur interférométrique (8) et da ledit capteur gyroscopique (9); ledit logiciel comporte de son côté une dynamique orbitale (1) représentant les équations qui fournissent la vitesse angulaire du système de référence de l'orbite à un moment donné, un modèle d'interféromètre (2) qui fournit les mesures interférométriques attendue et leurs dérivées sur la base de la position desdits satellites sources (10), dei désalignements étalonnés et de l'attitude estimée, un premier filtre préliminaire (3) qui assure les fonctions de filtrage préliminaire des mesures interférométriques et un pseudo-instrument de recherche de la dérivée, un deuxième filtre préliminaire (5) qui assure le préfiltrage des signaux provenant dudit capteur gyroscopique, un estimateur (4) qui, à partir des résidus entre lesdites mesures interférométriques et leurs dérivées et entre lesdites mesures interférométriques attendues et leurs dérivées, produit un feedback d'angles d'attitude sur l'observateur, une cinématique (6) calculant les angles d'attitude par rapport au système de référence de l'orbite à partir de la vitesse angulaire inertielle relative dudit véhicule (11) par rapport au système de référence de l'orbite, un circuit d'intégration (7) intégrant les équations différentielles de ledit estimateur (4); ledit logiciel assure les fonctions suivantes: le décodage de la position desdits satellites sources (10) et, par le traitement des données provenant desdits satellites sources (10), la détermination de la position dudit véhicule (11); calcul de l'attitude triaxiale dudit véhicule (11); calcul de l'erreur constante de mesure dudit interféromètre (8) par rapport au système de référence naturel dudit gyroscope (9); **se caractérisant par le fait que** ledit estimateur (4) utilise la différence entre les mesures dudit interféromètre (8) et la prédiction desdites mesures, comme résidus; que les mesures de l'attitude dudit véhicule peuvent être effectuées même si un seul desdits satellites sources (10) si trouve dans le champ visuel dudit véhicule (11); que les mesures de l'attitude dudit véhicule (11) peuvent être effectuées même dans des conditions d'invisibilité temporaire desdits satellites sources (10); et que ledit estimateur (4) peut exécuter l'étalonnement en ligne des erreurs statiques des mesures de la phase différentielles.

2. Le système revendiqué dans la revendication 1, est **caractérisé par le fait que** lesdits satellites sources (10) peuvent être un seul ou une constellation de satellites ou plusieurs constellations de satellites.

3. Le système revendiqué dans la revendication 1 ou dans la revendication 2 est **caractérisé par le fait que** ledit système peut fonctionner pour tout type dudit véhicule (11), et en particulier lorsque ledit véhicule (11) est un satellite.

4. Le système revendiqué dans n'importe laquelle des précédentes revendications est **caractérisé par le fait que** ledit système peut fonctionner pour tout type desdites antennes (12), et de préférence si les dites antennes (12) sono dotées d'un système de régulation thermique, ou s'ils sont stables en température, de préférence dans une plage de 3 degrés dans l'intervalle d'exploitation des températures, si lesdites antennes (12) possèdent un système de montage sur ledit véhicule (11) ou une configuration électromagnétique tels qu'ils puissent contenir l'erreur de phase due à la propagation multiple au-dessous de 3 degrés dans un cône de visibilité de 30 degrés par rapport à l'axe de l'antenne (12).

Fig. 1

Fig. 2

Fig. 3